# EUROPEAN PATENT APPLICATION

(11) **EP 3 585 121 A1**
(43) Date of publication of application: **25.12.2019**
(21) Application number: 18178311.9
(22) Date of filing: 18.06.2018
(51) Int. Cl.: H04W 72/12

(54) **SCHEDULING OF TIME SLOTS IN LPWANS**

(71) Applicant: Universiteit Gent, 9000 Gent (BE); IMEC vzw, 3001 Leuven (BE)
(72) Inventor: HAXHIBEQIRI, Jetmir, 9000 Gent (BE); HOEBEKE, Jeroen, 9840 De Pinte (BE)
(74) Representative: DenK iP

(57) **Abstract**

A centralized scheduler (3) for assigning communication slots in a data stream to a plurality of end nodes (1) in a communication network. The centralized scheduler (3) comprises a processing unit adapted for creating a synchronization message upon reception of a request from an end node (1). The synchronization message comprises a space efficient data structure which contains information to calculate or reconstruct slot assignments in the data stream during which the end node (1) may exchange data.

## Description

### Field of the invention

The present invention relates to scheduling of time slots in communication networks. More specifically it relates to scheduling of time slots by a centralized scheduler.

### Background of the invention

The Internet of Things (IoT) domain is characterized by many applications that require low-bandwidth communications over a long range, at a low cost and at low power. This has given rise to novel radio technologies that try to fill in this existing market gap of low-power wide area loT networks, often referred to as Low Power Wide Area Networks or LPWANs. Due to the use of sub-GHz radio frequencies, typically 169MHz, 433MHz, 868MHz (EU) or 915MHz (US), a single LPWAN base station has a large coverage area, with typical transmission ranges in the order of 1 up to 50 kilometers. As a result, a single base station can support high numbers of connected devices (> 1000 per base station), allowing a broad range of new technology companies to easily enter the loT market. Currently, several sub-GHz technologies are being promoted simultaneously, all of which use the same (limited) wireless spectrum. Notorious initiatives in this domain are LoRa, SigFox, IEEE802.15.4g and DASH-7.

These networks are low-power and have a low bandwidth, leaving little or no room for signaling between the gateways (GW) and the devices in order to coordinate packet transmissions, transmissions that can last longer than one second. As a result, a very basic mechanism is used to access the wireless medium, mostly being the Aloha protocol: whenever the device has something to transmit, it wakes up and will start the transmission. The mechanism is simple and does not require any signaling traffic between the end nodes and the network. However, this mechanism does not take into account that other devices may send at the same time, resulting in collisions and packet loss. This behavior will become more prominent when the number of deployed devices increases.

Considering the expected rise of LPWAN loT devices, this may become a showstopper for these networks. Better coordination of transmissions is needed, but this is hard to achieve as it comes with additional communication and thus energy consumption. One might opt for a periodic approach (cfr. IEEE 802.15.4e) in which slots are assigned according to a certain pattern and in which this pattern repeats over time to tackle this problem. However, this would either result in too many slots being allocated to infrequently communicating low-power devices or long periods of which the slot assignment cannot be passed to the devices due to the large overhead. So, in the absence of coordination mechanisms, LPWA networks suffer from scalability issues for networks with an increasing number of end nodes. When multiple end nodes are served by a single gateway, the number of collisions will rise, losing capacity and decreasing scalability of the network. The reliability of communication therefore will decrease with the increase of the number of end nodes. The same holds, when considering different LPWA networks that are operating in the same frequency band.

There is therefore a need for flexible coordination for scheduling time slots in communication networks and this particularly in the field of low power wide area transmissions.

### Summary of the invention

It is an object of embodiments of the present invention to provide a good centralized scheduler, an end node and a method for assigning communication slots in a data stream of a communication network.

The above objective is accomplished by a method and device according to the present invention.

In a first aspect embodiments of the present invention relate to a centralized scheduler for assigning communication slots in a data stream to a plurality of end nodes in a communication network. The centralized scheduler comprises a processing unit adapted for creating a synchronization message upon reception of a request from an end node. The synchronization message comprises a space efficient data structure which contains information to calculate or reconstruct slot assignments in the data stream during which the end node may exchange data.

A centralized scheduler according to embodiments of the present invention may for example be integrated in a base station or network server of the communication network (e.g. low power wide area network). In typical LoRa networks one network server may be managing a plurality of base stations. The scheduler functionality may in that case reside in the network server. In general, a base station or network server may support a plurality of end nodes. The base station may for example support more than 100 or even more than 500 or even more than 1000 end nodes.

It is therefore an advantage of embodiments of the present invention that collisions of data from the end nodes are avoided by providing slot assignments to the different end nodes. In prior art systems, which are for example based on the Aloha protocol, these collisions become more prominent with an increasing number of end nodes. Since, in embodiments of the present invention all data transmissions are synchronized, only unsynchronized end nodes can cause interference by transmitting their synchronization request (in case of in-band synchronization requests).

It is moreover advantageous that a space efficient data structure is used for passing slot assignments to an end node because this decreases the packet length of the signaling replies which on its turn allows to increase the number of end nodes and the number of slots (e.g. during 1 day a large number of slots may be present). A centralized scheduler according to embodiments of the present invention is particularly advantageous for low power wide area networks. The networks are characterized by low power (e.g. requiring a lifetime of several years using a single battery) and by low bandwidth (e.g. below 5kbit/s or down to 100bps). In such networks signaling is challenging and expensive. It is therefore advantageous to use a space efficient data structure for transferring the slot assignments.

It is an advantage of embodiments of the present invention that every individual node can determine when it wants to synchronize by sending a synchronization request to the scheduler. Thus, only infrequent signaling is required between the network and the end devices (e.g. few messages to the end device every day or every few days).

In embodiments of the present invention communication is typically initiated by the end devices meaning that the end device will make the request to get slot assignments. Once the first assignment has been made, further assignments could be pushed by the scheduler if a downlink slot is agreed upon that can be used for the next slot allocation round.

This is advantageous over prior art systems which require frequent scheduling during every super frame period. In these prior art systems synchronization is determined by the center point and all nodes must listen to the same SYN beacons from the center point. In these prior art systems assignments of a single time slot is done to end nodes within the super frame. In these prior art systems, no compression is possible. These prior art systems are typically also higher bandwidth, so dealing with bandwidth scarcity is less an issue. Moreover, the period between SYN beacons can change when more end nodes must be allocated within a single super frame. This results in higher overhead and more energy usage. It is an advantage of embodiments of the present invention that not all nodes must listen to SYN beacons to maintain synchronization.

It is an advantage of embodiments of the present invention that fully synchronized uplink transmissions from the end nodes are achieved. In embodiments of the present invention also fully synchronized downlink transmissions to the end nodes may be achieved.

A centralized scheduler according to embodiments of the present invention is applicable for joint coordination across LPWA networks.

In embodiments of the present invention the space efficient data structure is a probabilistic data structure.

In embodiments of the present invention the processing unit is adapted for creating the space efficient data structure using a data filter.

Such a data filter may for example be a bloom filter. It is an advantage of embodiments of the present invention that the signaling overhead is very limited and configurable, which makes it particularly suitable for low bandwidth networks.

This is achieved by sending a space-efficient probabilistic data structure (e.g. Bloom filter) from the centralized scheduler to the end node. Using this data structure, the end node can verify whether or not it is allowed to communicate in a specific slot. False positives (device thinks it can communicate in a slot, but in reality it is not allowed) are possible, but can be kept low as devices only communicate infrequently. In addition, by means of additional intelligence, the amount of false positives (transmissions that result in a collision) can be further reduced. The mechanism allows many variants and can be extended to other low-power networks to enable cross-technology coordination.

In embodiments of the present invention the centralized scheduler is adapted for taking into account clock drift of an end node when assigning slots to the end node.

In embodiments of the present invention the end nodes may report the clock drift in a synchronization request. In embodiments of the present invention the end node may communicate its clock accuracy to the centralized scheduler (else default clock drift can be assumed). When including the current time in request messages, the scheduler could derive the clock drift over larger periods of time. It is an advantage of embodiments of the present invention that the slot assignments (e.g. periodic slot assignments) can hold over a long period of time because they take into account clock drift of the end nodes.

In prior art systems, on the other hand, a fixed guard time is considered, putting a limit on the time a node can wait to be resynchronized. This is for example the case in 802.15.4e, wherein slot lengths of 10ms are being used (= transmission + guard time) and resynchronization must happen within e.g. 30 seconds for an end node with a clock drift of 10 ppm. At 10ppm, it takes 100s for a node to desynchronize by 1ms. Resynchronization every 30 sec provides a security factor of 3 (=100/30).

In embodiments of the present invention the centralized scheduler is adapted for taking into account the traffic needs of the requesting end node when assigning slots to the end node.

It is an advantage of embodiments of the present invention that the slots are assigned in function of the traffic needs. Thus, it can be avoided that too many resources are allocated or that too few slots are allocated. In embodiments of the present invention slots may be assigned periodically. It is an advantage of embodiments of the present invention that scheduling of periodic transmissions is possible with different periods for different end nodes depending on the end node requirements.

The number of end nodes that can be supported is increased by considering the traffic patterns of end nodes and the length of their time slots. It is possible to determine the maximal number of end nodes that can be served based on their traffic patterns, data-rate, packet lengths, and the resulting slot allocations.

The traffic needs may for example be the required number of transmissions in a period, or whether downlink traffic is needed.

In embodiments of the present invention the centralized scheduler is adapted for taking into account restrictions of a gateway over which the messages to and from the requesting end node are transmitted when assigning slots to the end node.

The slot assignments may for example be periodic slot assignments. In embodiments of the present invention every new end node that joins the network is assigned communication slots based on its traffic requirements. When downlink traffic is involved, the duty cycle limitations of the gateway are also taken into account. By doing so, traffic becomes organized, resulting in an increase of network scalability. The invention is unique as it only requires very low-overhead signaling to organize transmissions in low power area networks over large time periods (up to multiple days).

In embodiments of the present invention the space efficient data structure for an end node comprises slot assignments during which data in downstream communication data slots is assigned to the end node.

These downstream slot assignments may be periodic slot assignments. It is an advantage of embodiments of the present invention that also in the downstream communication data slots can be assigned to a specific end node.

In embodiments of the present invention the centralized scheduler is adapted for assigning a shared downlink slot upon reception of a request from at least one end node.

This slot can then be used to send a broadcast message to all these nodes or a multicast message to a plurality of end nodes, as the nodes to which this slot is assigned will all listen at the same time during this assigned time slot to a downlink message. Current systems do not have such a feature. It is therefore an advantage of these embodiments of the present invention that they enable coordinated downlink transmission.

In a second aspect embodiments of the present invention relate to base station comprising a centralized scheduler in accordance with any of the previous claims, and comprising a receiver, and a transmitter, wherein the receiver is adapted for receiving a request of an end node and for passing this request to the centralized scheduler and wherein the transmitter is adapted for transmitting the synchronization message to the end node.

In embodiments of the transmitter and the receiver are adapted to operate in a sub-Ghz frequency range.

It is an advantage of embodiments of the present invention that the base station is operating in the sub-Ghz frequencies as this allows to realize a LPWAN base station with a large coverage area. The sub-Ghz frequencies are typically 169MHz, 433MHz, 868MHz (EU) or 915MHz (US). Thus, base stations can be obtained with transmission ranges from 1 km up to 50 kilometers or more.

In a third aspect embodiments of the present invention relate to end node or a communication network which comprises a centralized scheduler according to embodiments of the present invention. The end node comprises a processing unit which is adapted for sending a request to and for receiving a synchronization message from the centralized scheduler and the processing unit is adapted for calculating or reconstructing slot assignments from the synchronization message during which the end node may exchange data.

In a fourth aspect embodiments of the present invention relate to a communication network comprising a base station according to embodiments of the present invention and at least one end node according to embodiments of the present invention.

It is an advantage of embodiments of the present invention that all data transmissions are synchronized. In case of in-band synchronization requests only unsynchronized nodes can cause interference by transmitting their synchronization requests.

It is an advantage of embodiments of the present invention that the average power per transmitted bit is lower compared to a totally unsynchronized network with a large number of end nodes. The reason therefore is that in networks according to the present invention retransmissions are not required. This is particularly advantageous for low power wide area networks.

In embodiments of the present invention the end node is adapted for sending the synchronization request message out of band of the data stream.

It is an advantage of embodiments of the present invention that data traffic will not be impacted by not yet synchronized nodes. Moreover, embodiments wherein the end node is sending the synchronization request message out of band of the data stream allow for coexistence between end nodes using the present invention and legacy nodes by allocating them to different bands.

In a fifth aspect embodiments of the present invention relate to a time slot allocation method for allocating time slots in a communication network. The method comprises a synchronization phase which comprises:
- sending a synchronization request from an end node to a centralized scheduler, and
upon reception of the synchronization request by the centralized scheduler:
- preparing a synchronization message which comprises a space efficient data structure which comprises slot assignments in the data stream during which the end node may exchange data,
- and sending the synchronization message from the centralized scheduler to the end node, and which comprises a data communication phase wherein data is transmitted and/or received by the end node during the assigned slots.

Time slot allocation methods according to embodiments of the present invention are particularly suited for allocating time slots in low power wide area networks.

To transmit data packets, the end node checks for each time slot if it is part of the data structure received by the end node during the synchronization phase. If the time slot is part of the data structure, the end node can transmit data packets, if not, it is prohibited to transmit. In order to decrease the number of checks, the end node can wake up to only perform this process at every uplink transmission period.

In embodiments of the present invention preparing the synchronization message comprises applying a data filter with a predefined bit length to obtain the space efficient data structure.

It is an advantage of embodiments of the present invention that a probabilistic space efficient data structure with a predefined bit length can be obtained. Thus, independent of the number of time slots that must be communicated to the end device, the length of this information will always be fixed. The applied data filter may for example be a Bloom filter.

In embodiments of the present invention the method comprises assigning a shared downlink slot upon reception of a request from at least one end node.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a schematic drawing of a synchronization procedure in accordance with embodiments of the present invention.
FIG. 2 shows the calculation of the next slot time in an end node after synchronization in accordance with embodiments of the present invention.
FIG. 3 shows a schematic drawing illustrating continuous checking of the space efficient data structure by the end node in accordance with embodiments of the present invention.
FIG. 4 schematically illustrates adding slots in the data structure using Bloom filters and checking if a slot is part of the data structure in accordance with embodiments of the present invention.
FIG. 5 shows a schematic drawing illustrating periodic checking of the space efficient data structure by the end node in accordance with embodiments of the present invention.
FIG. 6 shows a flow chart of possible method steps for processing synchronization and resynchronization requests in accordance with embodiments of the present invention.
FIG. 7 shows a flow chart illustrating continuous and periodic checking for time slots at an end node in accordance with embodiments of the present invention.
FIG. 8 - FIG. 11 show combinations of in-band / out-of-band synchronization and resynchronization in accordance with embodiments of the present invention.
FIG. 12 shows payload structures of a synchronization request in accordance with embodiments of the present invention.
FIG. 13 shows payload structures of a synchronization reply in accordance with embodiments of the present invention.
FIG. 14 - FIG. 17 show assignment of time slots for end nodes in accordance with embodiments of the present invention.
FIG. 18 shows an algorithm to add the assign slots for an end node in accordance with embodiments of the present invention.
FIG. 19 shows an example of an embodiment with guard time interval in accordance with embodiments of the present invention.
FIG. 20 and 21 illustrate using a probabilistic data structure for communicating time slots to an end node in accordance with embodiments of the present invention.
FIG. 22 illustrates sending raw delta between time slots to an end node in accordance with embodiments of the present invention.
FIG. 23 illustrates sending a seed number to an end node in accordance with embodiments of the present invention.
FIG. 24 shows a graph illustrating the scalability of networks in accordance with embodiments of the present invention.

Any reference signs in the claims shall not be construed as limiting the scope.
In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect embodiments of the present invention relate to a centralized scheduler. This centralized scheduler is adapted for assigning communication slots in a data stream to a plurality of end nodes in communication network (e.g. a low power wide area network). The centralized scheduler comprises a processing unit adapted for creating a synchronization message upon reception of a request from an end node. The synchronization message is thereby created such that it comprises a space efficient data structure which contains information to calculate or reconstruct slot assignments in the data stream during which the end node may exchange data. These slot assignments may have a periodicity, however, this is not strictly required.

Such a centralized scheduler may for example be applied in an LPWA network where it enables flexible coordination of LPWAN transmissions. It may achieve these slot assignments in both uplink and downlink communication. For the upstream communication the data structure contains information to calculate or reconstruct slot assignments in the data stream during which the end node may transmit data. For the downstream communication the data structure for an end node comprises slot assignments during which data in downstream communication data slots is assigned to the end node. Alternatively, every upstream slot can be implicitly followed by a corresponding downstream slot. This is for example the case in a request response traffic pattern. For every upstream packet, the end node expects a downstream packet (e.g. a response or acknowledgement). If this is the case, it may for example be agreed upon to have a downstream slot immediately or shortly after the upstream slot (in that case no explicit assignment of downlink slots is needed).

In embodiments of the present invention the centralized scheduler may be configured such that every new end node (e.g. LPWAN device) that joins the network is assigned communication slots based on its traffic requirements, synchronization periodicity, clock drift, and optionally other context information (need for downlink, number of transmissions, etc.).

When downlink traffic is involved, the centralized scheduler may be configured such that the duty cycle limitations of the gateway are also being taken into account. By doing so, traffic becomes organized, resulting in an increase of network scalability.

In embodiments of the present invention the centralized scheduler may even consider the clock drift of the end node that might occur until the next synchronization period. This has as advantage that only infrequent signaling between the network and the end devices is required (e.g. few messages to the end device every day or every few days). On top, the signaling overhead is very limited and configurable, which makes it particularly suitable for these low bandwidth networks.

Limiting the signaling overhead is achieved by sending a space-efficient data structure (e.g. a probabilistic data structure such as a Bloom filter, a data structure containing compact info to calculate or reconstruct periodic slot assignments, etc.) from the central scheduler to the end device. Using this data structure, the end device can verify whether it is allowed to communicate in a specific slot or calculate the next slot. For probabilistic data structures, false positives (device thinks it can communicate in a slot, but in reality it is not allowed) are possible, but can be kept low in practice as devices only communicate infrequently. In addition, by means of additional intelligence (e.g. the assignment and verification strategy), the amount of false positives, and thus transmissions that result in a collision, can be further reduced.

It is an advantage of embodiments of the present invention that the mechanism of synchronization messages, which are sent upon reception of a request and which comprise a space efficient data structure which comprises slot assignments, can be extended to other low-power networks to enable cross-technology coordination.

In a first aspect embodiments of the present invention relate to the centralized scheduler.

In a second aspect this centralized scheduler may be integrated in a base station which comprises a receiver for receiving the request and a transmitter for transmitting the response.

In a third aspect embodiments of the present invention relate to an end node which is adapted for communicating with the centralized scheduler. It therefore comprises a processing unit which is adapted for sending a request to the centralized scheduler and for receiving a synchronization message from the centralized scheduler. The processing unit of the end node is moreover adapted for calculating or reconstructing slot assignments from the synchronization message during which the end node may transmit data.

In a fourth aspect embodiments of the present invention relate to a communication network comprising a centralized scheduler and a plurality of end nodes according to embodiments of the present invention.

In a fifth aspect embodiments of the present invention relate a method for allocating time slots similar as is implemented in the centralized scheduler and the end nodes.

A centralized scheduler or a method in accordance with embodiments of the present invention offers synchronized uplink and possibly also downlink communication between multiple end nodes and the network.

The communication between the end nodes and the network follows two phases. In the first phase the end node asks to synchronize with the network while in the second phase the actual data communication takes place. The synchronization phase may be repeated. In that case the repetition periodicity may be managed by the network and is a function of the clock accuracy of the end node itself.

In the communication network time is divided in fixed time slots. The time slot length is known a priori by all devices in the network. The advance of time slot index is kept by the centralized scheduler. In embodiments of the present invention the synchronization entity also keeps track of the time slots that are already assigned to specific end nodes that uses a specific channel and a specific data rate.

In embodiments of the present invention a synchronization or re-synchronization phase may be followed by a data transmission phase. In the following paragraphs an exemplary method according to an embodiment of the present invention is discussed. First the synchronization phase is discussed and thereafter the data transmission phase.

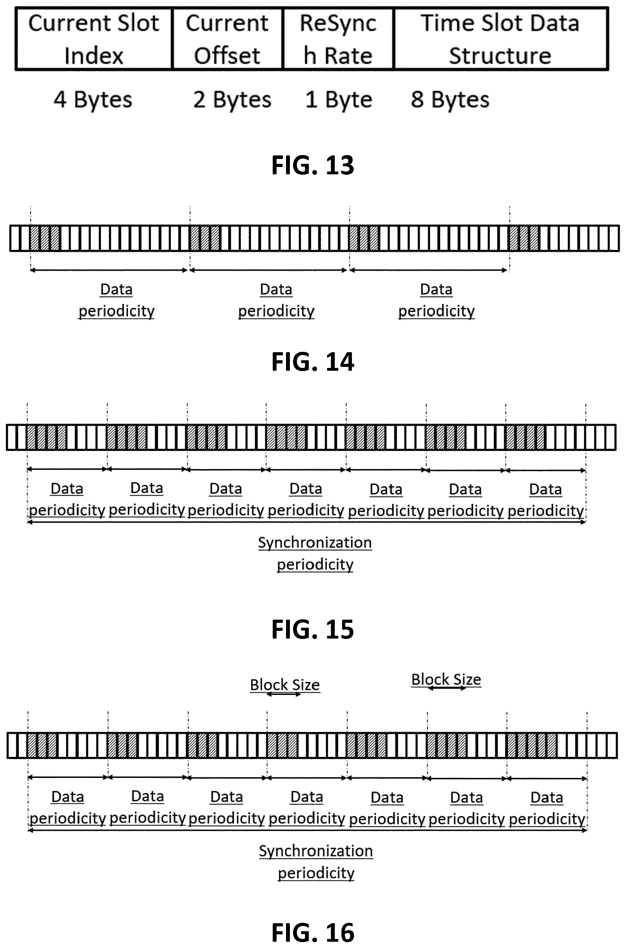

Once the end node 1 'wakes up', it is unsynchronized and will send a synchronization request (SynchReq) to the centralized scheduler 3 (in this example via the gateway 2). This synchronization request may comprise the communication requirements of the end node (e.g. uplink transmission frequency). Once the gateway receives such a request from the node, it will relay it to the centralized scheduler 3. The centralized scheduler 3 will send a synchronization reply (SynchRep) which may for example contain the following information (see also FIG. 13 for an example of a synchronization reply payload structure): current time slot index, time offset in the current time slot, time slot offset for the next synchronization and all the next time slots when the end node can transmit data packets. The slot assignment may thereby take into account the clock drift of the end node that can occur until the next synchronization (in a re-synchronization phase). This may be achieved either by allocating slots that are sufficiently large / allocating a sequence of slots to accommodate the worst possible clock drift or by reserving an increasing number of surrounding slots over time at the centralized scheduler.

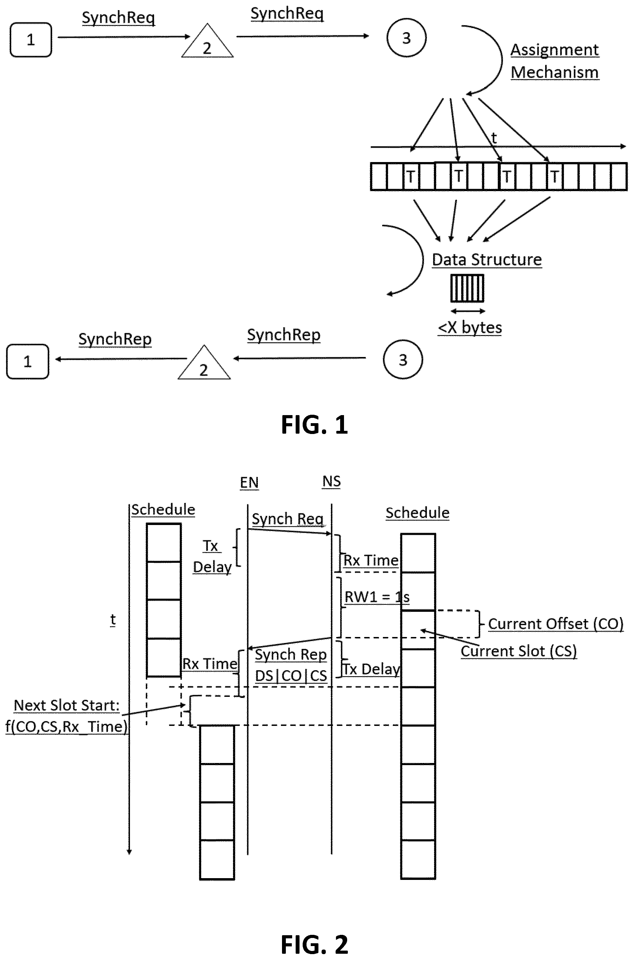

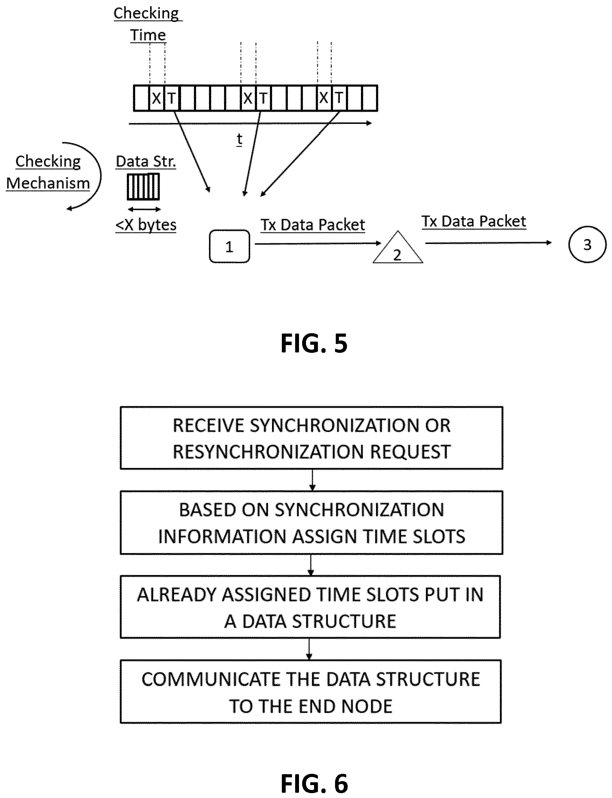

The synchronization message may comprise next time slots when the end node can transmit data packets. This information is thereby compressed in a space-efficient data structure with a certain bit length (< X bytes). An example of such a synchronization procedure in accordance with embodiments of the present invention is illustrated in FIG. 1. It shows the end node 1, the gateway 2, and the centralized scheduler 3. In this figure the T slots are the assigned time slots. Possible method steps for processing synchronization and resynchronization requests are shown in the flow chart in FIG. 6

One example technique for compressing the allocation information in a space efficient data structure is the use of a space-efficient probabilistic data structure such as a Bloom Filter. Using such a filter, the length of the data structure can be kept constant, independent of the number of time slots that has to be communicated to the end device. The centralized scheduler thereby assigns the slots at least based on the slot availability (see further for other parameters).

Once the end node 1 receives the synchronization reply it gets synchronized (an example how this can be done is illustrated in FIG. 2 wherein the calculation of a next slot time in an end node after synchronization is illustrated and can follow the time slot index increments and can calculate or reconstruct from the synchronization reply in which slots is allowed to transmit and in which not. In case downlink traffic has been requested, slots for downlink communication will be allocated as well.

In this example the current slot (CS) is the time slot index, from the perspective of the scheduler, during which the synchronization reply (SynchRep) is sent. The current offset (CO) is the time offset from the start of the current slot that indicates the exact moment within the current slot at which the synchronization reply (SynchRep) is sent. The data structure (DS) encodes all the time slots at which the end node can transmit data. Based on CS and CO and the knowledge of the Tx delay (as the packet size and data rate are known), the end node can synchronize its clock with the scheduler (alignment of slot boundaries) and derive the correct index of the slot (which must be the same as the scheduler).

Alternatively (but not shown in FIG. 2), CS and CO could be based on reception time of SyncReq (reception in which slot and at which offset), if the downlink transmission of the Sync Rep starts at a known delay DL after the uplink transmission (e.g. the RW1 window in LoRa). Calculation is then similar, but the end node should then consider this additional DL in the calculation.

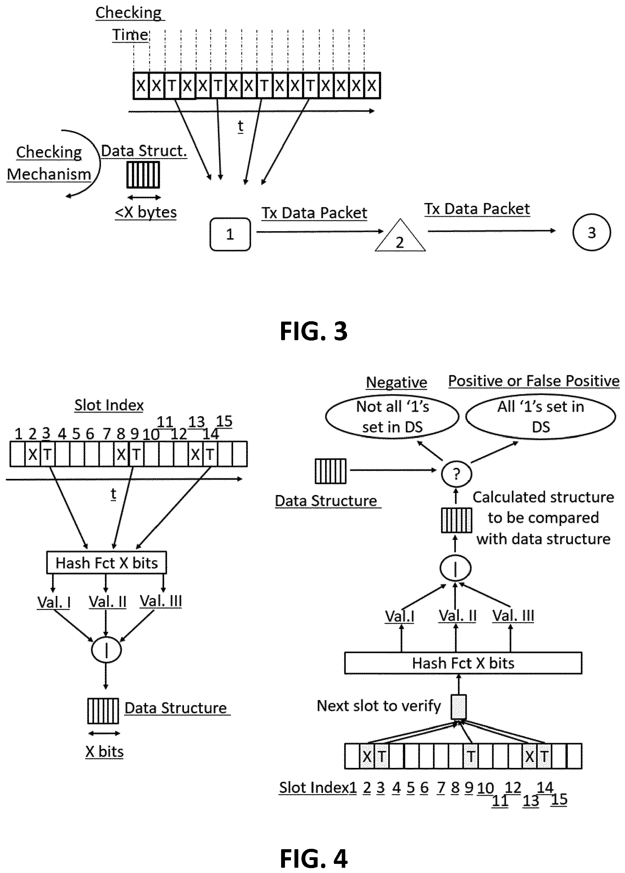

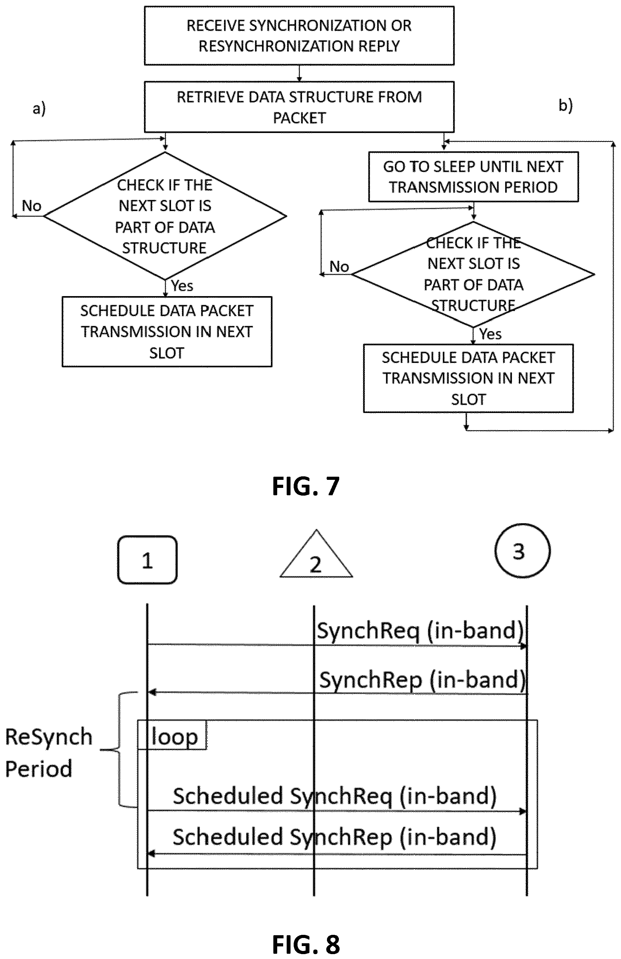

To be able to transmit data packets, the end node checks for each time slot if it is part of the data structure which is part of the synchronization message which the end node received from the centralized scheduler during the synchronization phase. If the time slot is part of the data structure, the end node can transmit data packets, if not, it is prohibited to transmit. In order to decrease the number of checks, the end node can wake up to only perform this process at every uplink transmission period. Continuous checking of the space efficient data structure by the end node for transmitting of data packets during the assigned time slots T is illustrated in FIG. 3. A continuous checking mechanism checks the data structure and data packets are transmitted during the assigned time slots and not during the slots X which are not part of the data structure. In the example the data packets are transmitted to the gateway 2 which forwards them to the centralized scheduler 3. Method steps for continuously checking for time slots at the end node are shown in branch a of the flow chart illustrated in FIG. 7.

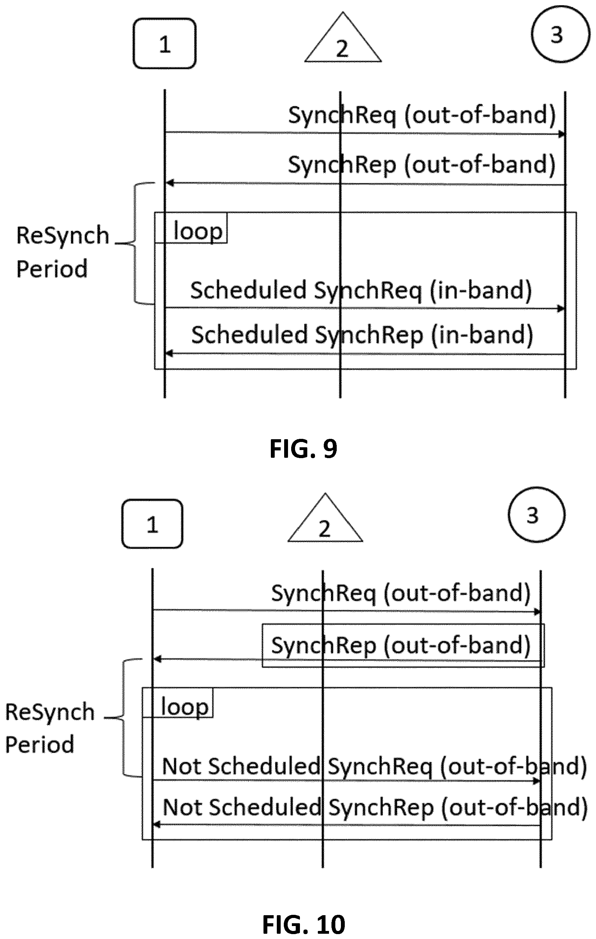

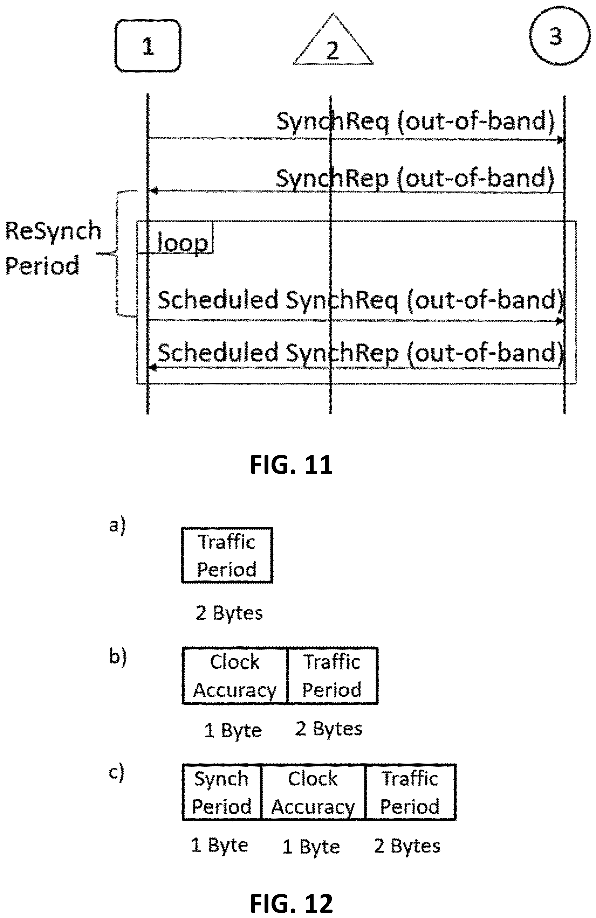

There are different possibilities and combinations for synchronization and resynchronization based on the channel where the synchronization requests and replies are transmitted. Synchronization and re-synchronization can be done in-band and out-of-band. For fully in-band synchronization and resynchronization both synchronization requests and replies are transmitted in the same channels as data packets (see also FIG. 8). In such a case, end nodes that are not yet synchronized will impact the data transmission of other already synchronized end nodes. This will result in some data packets losses for end nodes that have been already synchronized. In case of out-of-band synchronization, one channel will be reserved for synchronization request and replies packets by end nodes (and possibly random access data). All the rest of the packets (data packets, resynchronization request and reply) are sent in the same channels as data packets. This will have practically zero impact on the data packets since everything after first synchronization will be synchronized and the end nodes will not impact each other (see also FIG. 9). The third scheme is the full out-of-band synchronization where both synchronization and resynchronization happen in separate channel (see also FIG. 10 and FIG. 11). In this case it might happen for a node that it is already synchronized not to get resynchronized due to resynchronization packet collisions in the synchronization channel. Whereas for FIG. 10 the synchronization requests and replies in the synch period are not scheduled, those in FIG. 11 are scheduled.

Several possibilities exist to efficiently encode during which slots a node is allowed to communicate, depending on the synchronization periodicity, number of assigned slots, periodicity of communication, etc.

For example space-efficient, probabilistic data structures such as Bloom filters may be used. Based on the assigned slots and number of assigned slots, the centralized scheduler may for example create a Bloom filter with optimal data structure length and number of hash functions in order to keep the number of false positives sufficiently low. Every slot ID that is part of the set of assigned slots is added to the Bloom Filter. Next, the Bloom filter is passed to the end node and is used by the node to verify whether a certain slot ID is part of the set. This data structure is suited for all cases where the size of the data structure is smaller than passing all individual slot IDs (size = number of assigned slots times size of single slot ID) and the centralized scheduler aims to have complete freedom over the assignment in order to make optimal use of the available capacity. FIG. 4 schematically illustrates adding slots in the data structure using Bloom filters (left side of the figure) and checking if a slot is part of the data structure (right side of the figure). The left side of the figure shows that, in a first stage IDs of assigned slots are fed to hash function(s). Next the figure shows the calculation of N hash functions (3 in this case), resulting in 3 values with a value between 0 and X-1. Every value results in setting the bit in the data structure of length X that has an index equal to that value, to '1' (with bit indexes going from 0 to X-1 in a data structure of length X).

The right side of the figure shows an example of how to test whether the shaded slots are part of the data structure or not by feeding slot IDs to hash function(s). In this example the ones marked with X have not been assigned, and the ones marked with T have been assigned. A structure of X bits is calculated after feeding the slot ID to the hash functions, with bits in the structure set to '1' according to the values of the hash functions. The calculated structure is compared with the data structure. If the ones in the calculated structure have been set in the data structure a positive or false positive result is obtained. If not all ones are set in the data structure a negative result is obtained.

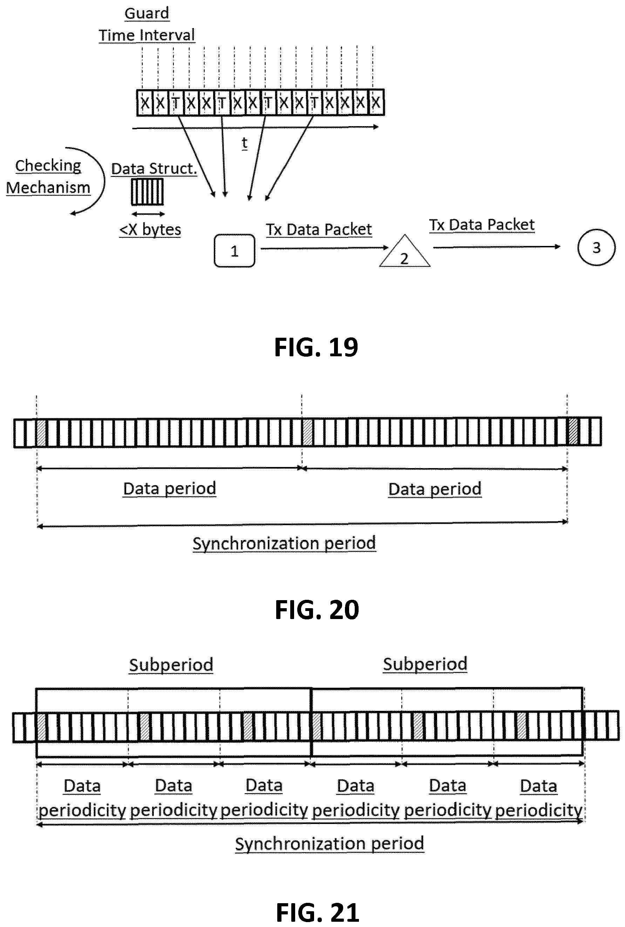

FIG. 20 illustrates using a probabilistic data structure for communicating time slots to the end node. In FIG. 20 the number of total available time slots is high within one synchronization period. Also, the data traffic period is long. There is a limited number of assigned slots during the synchronization period. Every slot that is part of the set of assigned slots is added to the probabilistic data structure which has a size which is smaller than the number of assigned slots times size of single slot ID.

For periodic slot assignments, the node will wake up at the next transmission period and start checking which slot can be used. Periodic checking of the data structure for the schedule is illustrated in FIG. 5 wherein the checking times are significantly reduced compared to FIG. 3 wherein the data structure is continuously checked. Method steps for periodically checking for time slots at the end node are shown in branch b of the flow chart illustrated in FIG. 7. To reduce the number of false positives, an assignment and verification strategy may be used that makes use of the device ID of the end node, the relative slot number (i.e. slot 1, 2, ... out of N assigned slots in total), the assignment attempt (1^{st}, 2^{nd}, 3^{rd}, etc.), and a known window size from which slots can be assigned. Feeding the first 3 parameters to a hash and calculating its value modulo the window size, the slots to be assigned are calculated by the server and put in the data structure. The processing unit of the node will apply the same strategy to determine in which order slots have to be checked within a certain window size. Instead of sequentially checking the slots one by one, verification will be more focused as well as more randomized. The processing unit of the node will still check whether a slot is part of the set or not (as described before), but the slot IDs that are fed will be different.

Using this strategy, the possibility of having false positives at the end node is reduced. Using this strategy slot assignments become more randomized. Alternatively, the slots might be assigned in such a way to minimize the number of 1's in the data structure.

FIG. 21 illustrates using a probabilistic data structure for communicating time slots to the end node, with a shorter data periodicity than the synchronization periodicity. In this example the number of total available time slots is high within one synchronization period. In this example the data traffic period is short resulting in too many assigned slots during the synchronization period for one single probabilistic data structure. This can be solved by dividing the synchronization period in subperiods and by doing the assignment within subperiods combined with a repetition of subperiods. In this case a probabilistic data structure is used for a subperiod. Its size is smaller than the size of a single slot ID times the number of assigned slots per subperiod. Using this probabilistic data structure, a high compression and low false positive probability can be obtained.

In case the number of slots to be assigned over the entire synchronization period becomes too big for the Bloom filter to have a sufficiently low number of false positives, the synchronization period is broken down into M shorter subperiods. The slots are assigned on a per subperiod basis using Bloom filters and the subperiod repeats M times over the entire synchronization period. This introduces variability in the assignment (instead of using a single fixed increment to find the next slot), providing more flexibility to optimally use available capacity.

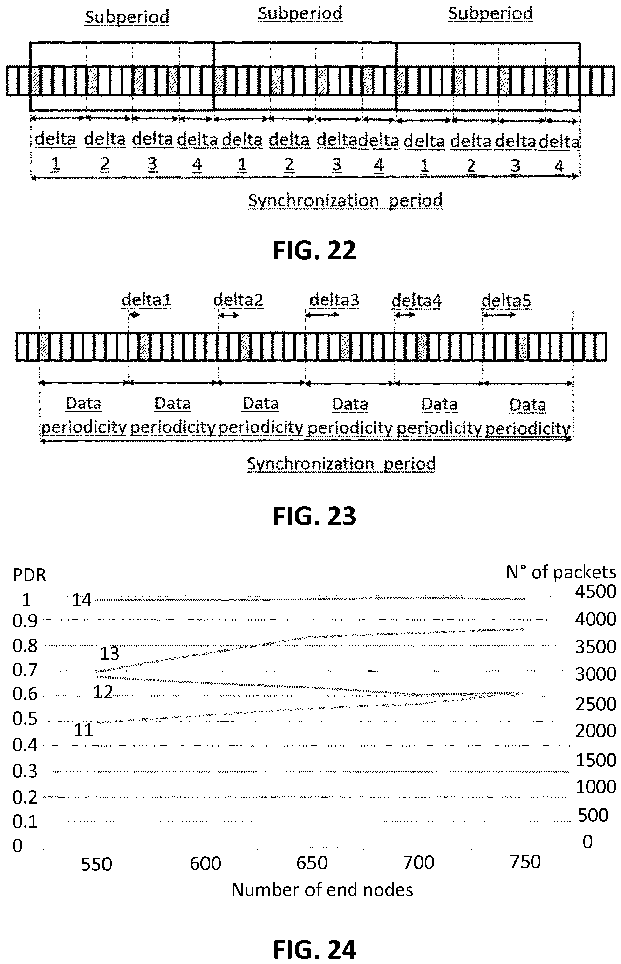

In embodiments of the present invention the space efficient data structure may be a space-efficient delta-encoded data structure. In case the number of assigned slots is still too high for the space-efficient probabilistic data structure to be efficient, the assigned slots during a subperiod can be encoded using delta encoding and passed to the end node. This is advantageous in case the size of the delta encoding is smaller than the size of a Bloom filter for the same number of assigned slots. An example of such a delta-encoded data structure is illustrated in FIG. 22. In this example raw deltas between slot IDs or a compact encoding of the deltas are sent to the end node, without adding time slot IDs in a probabilistic data structure. Compact encoding of the deltas can for example be achieved by passing the smallest delta and the delta of all deltas compared to this smallest delta. The newly calculated deltas will be smaller in value and can be obtained in a more compact way.

In embodiments of the present invention the space efficient data structure may be a space-efficient seed-based data structure. The data structure can be further reduced by including a seed instead of a Bloom filter or deltas. This seed is selected by the centralized scheduler. Using a hash function that takes as an input the device ID of the end node, the relative slot number within the (sub)period and the seed, a value is calculated. The output of this value modulo a known window size is used to calculate the delta to the previous slot. An example where a seed number is sent to the end node to calculate the different deltas is illustrated in FIG. 23. In this example a seed number is sent to the end node together with a starting slot ID and data period. The deltas can be calculated in function of the slot ID, the node ID, and the seed.

Depending on the chosen data structure, more or less fine-grained control is given to the centralized scheduler for performing slot assignments and optimally using the available capacity.

Assignment of time slots to end nodes can be determined by the centralized scheduler based on a variety of parameters which are enumerated in the following paragraphs.

One of the parameters may be the traffic patterns of the end nodes, e.g. traffic periodicity in uplink, multiple transmissions of the same packet to achieve reliability, downlink traffic involved for (some) uplink messages, responsiveness of the device (for actuation). Based on the knowledge on the traffic patterns, a proper slot allocation can be designed. End nodes may pass the traffic periodicity to the centralized scheduler in their synchronization request payload structure (see e.g. FIG. 12a, 12b, and 12c).

Another parameter may be the number of requested slots. Depending on the number of requested slots and when using a probabilistic data structure such as a Bloom filter, the length of the data structure can be adjusted in order to find an optimal trade-off between the packet size and the number of false positives.

Another parameter may be the payload size. The payload size will determine the packet length and duration of the transmission, which might exceed the duration of the time slot (e.g. for LPWA networks with multiple data rates or for small time slot units). In that case, a block of consecutive time slots can be assigned, with the block length being communicated to the end node. Assignment of time slots based on the packet length and the data periodicity is illustrated in FIG. 14, where 3 consecutive slots are assigned to a node for every data transmission. In this and the following figures the patterned time slots are the assigned time slots.

Another parameter may be the SNR or RSSI of the signal received by the end node. In case the end node might degrade SNR conditions for already assigned nodes in a certain time slot, it will be allocated a different slot.

Another parameter may be the possibility to assign the same time slot to multiple end nodes by letting these nodes use different channels or non-interfering coding schemes (e.g. SigFox and LoRa can make use of different channels, LoRa can make use of different quasi-orthogonal spreading factors, etc.). In that case the same time slot can be assigned to more than one node.

Another parameter may be the presence of multiple GWs and/or the (derived) location of nodes the fact that a node can be in reach of more than 1 gateway. In case of multiple GWs, end nodes can be assigned to a GW, channel and time slot based on location.

Another parameter may be the synchronization periodicity. The synchronization periodicity determines how often a node will resynchronize. In case of a large periodicity and thus potential higher clock drift, larger blocks of time slots can be assigned to take into account the clock drift over time. Based on the synchronization periodicity and the number of required slots, the best space-efficient data structure can be selected. End nodes may pass the synchronization periodicity to the centralized scheduler in their synchronization request payload structure (see e.g. FIG. 12c).

Another parameter may be the specific clock accuracy of end nodes (in ppm). The clock accuracy of an end node will determine how accurate the end node will remain synchronized with the centralized scheduler. By default, a common worst case clock accuracy can be assumed and taken into account as part of the slot assignment. Alternative, when different end nodes have different clock drifts, nodes can pass their clock accuracy to the centralized scheduler (see for example the synchronization request payload structure in FIG. 12b and 12c).

By considering the clock accuracy, the centralized scheduler can determine the number of slots that needs to be assigned/reserved in order to take into account the maximum clock drift that can occur by the end of the synchronization period, thus providing guard times. Assignment of time slots based on the packet length, the data periodicity, and the clock drift is illustrated in FIG. 15, where 1 additional slot is assigned compared to FIG. 14 in order to take into account the maximum possible clock drift. For data transmission that fit within a single time slot, a guard time interval may be provided for each time slot to take into account clock drift. An example of such an embodiment with guard time is illustrated in FIG. 19.

Alternatively or additionally, the clock accuracy known by both the centralized scheduler and the end node, can be used to automatically increase the number of assigned slots over time to cope with the increase in clock drift over time and until the next synchronization period (both the end node and centralized scheduler using the same algorithm to determine the number of slots over time). Assignment of time slots based on the packet length, the data periodicity, and the clock drift wherein the block size is increased by time is illustrated in FIG. 16.

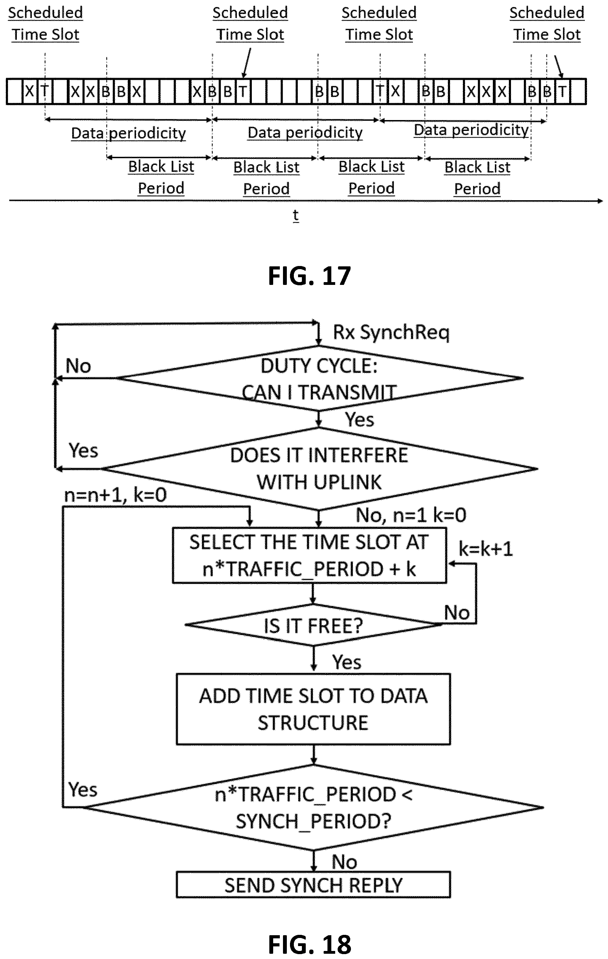

Another parameter may be the measured interference patterns from other networks in the same frequency band. In case interference from other networks has been detected and this interference has a specific pattern, it can be taken into account for the slot allocation. FIG. 17 illustrates the assignment of time slots for end node with certain data periodicity when black listing certain slots due to interference.

Another parameter may be coordination with other LPWA networks operating in the same frequency band and using the same mechanism. When different LPWA networks use the same mechanism, their centralized schedulers can share the assigned slots. Based on this information, interference free communication of different low-power networks in the same band can be achieved.

Another parameter may be uplink guarantees for end nodes. In some use cases, it will not be known beforehand when nodes will have data to transmit, but they want to have some periodic opportunities to transmit. In that case, and to avoid waste of spectrum, multiple end nodes can be assigned the same blocks of time slots, with randomness to distribute potential usage.

Another parameter may be the need for group-based interactions. In that case slots are scheduled to let a group of nodes listen in a coordinated fashion and perform downlink multicast communication or resynchronization (with reuse of the previously assigned slots during the next synchronization period).

An exemplary algorithm to assign slots for an end node which may be implemented in the centralized scheduler is illustrated in FIG. 18. This algorithm is only illustrative and is not limiting for the present invention.

In summary, in embodiments of the present invention every new end node that joins the network is assigned communication slots. This may be based on the traffic requirements of the end node. When downlink traffic is involved, the duty cycle limitations of the gateway may also being taken into account. By assigning the communication slots, traffic becomes organized, resulting in a tremendous increase of network scalability. The invention is unique as it only requires very low-overhead signaling to organize transmissions in, for example, LPWA networks over large time periods (up to multiple days).

This is also illustrated with the graph in FIG. 24 of which the curves are experimentally obtained as well as using a LoRa implementation in a network simulator.

Both approaches have revealed that LoRa networks do not scale well, in particular when downlink traffic is present. This is exactly due to the fact that access to the wireless medium is random and not organized, resulting in an increase of packet losses when more and more devices are being rolled out. The problems become even bigger when devices are also requesting downlink traffic (e.g. acknowledgements of sent packets). The gateway has to adhere to the duty cycle limitations. Once the amount of downlink traffic exceeds this duty cycle limitation, the gateway is no longer able to send downlink packets to all end nodes, resulting in loss of reliability, retransmissions and thus even more traffic that will further degrade the network performance.

In this figure curve 14 shows PDR (Packet Delivery Ratio) for the synchronized case according to embodiments of the present invention. The PDR remains stable and is nearly 1 (i.e. 100% or hardly any packet losses) as there is no packet loss as all communication is scheduled. The only packet losses that occur are due to false positives of Bloom filters.

Curve 12 shows PDR for the unsynchronized case (i.e. normal LoRaWAN operation without scheduling). The PDR decreases with an increasing number of end devices in the network as more and more packets will be lost with the increase of traffic in the network due to collisions. This may result in a PDR which, for 500 nodes and more, is 30% higher for embodiments of the present invention compared to a default LoRa solution. This PDR difference even increases when adding more devices to the network.

Curve 13 shows the total number of packets delivered to the network for the synchronized case. It increases as the number of end nodes is increased too, meaning that there are more packets sent over the network, while the PDR remains high (curve 14)

Curve 11 shows the total number of packets delivered to network for unsynchronized case. Even here the curve increases with the number of end nodes increasing, but the increase is rather slower than in synchronized case due to the negative impact of increased traffic.

## Claims

1. A centralized scheduler (3) for assigning communication slots in a data stream to a plurality of end nodes (1) in a communication network, the centralized scheduler (3) comprising a processing unit adapted for creating a synchronization message upon reception of a request from an end node (1), wherein the synchronization message comprises a space efficient data structure which contains information to calculate or reconstruct slot assignments in the data stream during which the end node (1) may exchange data.

2. A centralized scheduler (3) according to claim 1, wherein the space efficient data structure is a probabilistic data structure.

3. A centralized scheduler (3) according to claim 2, wherein the processing unit is adapted for creating the space efficient data structure using a data filter.

4. A centralized scheduler (3) according to any of the previous claims wherein the centralized scheduler (3) is adapted for taking into account clock drift of an end node (1) when assigning slots to the end node (1).

5. A centralized scheduler (3) according to any of the previous claims wherein the centralized scheduler (3) is adapted for taking into account the traffic needs of the requesting end node (1) when assigning slots to the end node (1).

6. A centralized scheduler (3) according to any of the previous claims wherein the centralized scheduler (3) is adapted for taking into account restrictions of a gateway over which the messages to and from the requesting end node (1) are transmitted when assigning slots to the end node (1).

7. A centralized scheduler (3) according to any of the previous claims wherein the space efficient data structure for an end node (1) comprises slot assignments during which data in downstream communication data slots is assigned to the end node (1).

8. A centralized scheduler (3) according to any of the previous claims wherein the centralized scheduler (3) is adapted for assigning a shared downlink slot upon reception of a request from at least one end node (1).

9. A base station comprising a centralized scheduler (3) in accordance with any of the previous claims, and comprising a receiver, and a transmitter, wherein the receiver is adapted for receiving a request of an end node (1) and for passing this request to the centralized scheduler (3) and wherein the transmitter is adapted for transmitting the synchronization message to the end node (1).

10. A base station according to claim 9 wherein the transmitter and the receiver are adapted to operate in a sub-Ghz frequency range.

11. An end node (1) for a communication network which comprises a centralized scheduler according to any of the claims 1 to 8, wherein the end node comprises a processing unit which is adapted for sending a request to and for receiving a synchronization message from the centralized scheduler and wherein the processing unit is adapted for calculating or reconstructing slot assignments from the synchronization message during which the end node may exchange data.

12. A communication network comprising a base station according to claim 9 or 10 and at least one end node (1) according to claim 11.

13. A communication network according to claim 12 wherein the end node (1) is adapted for sending the synchronization request message out of band of the data stream.

14. A time slot allocation method for allocating time slots in a communication network, the method comprising a synchronization phase which comprises:
- sending a synchronization request from an end node (1) to a centralized scheduler (3), and upon reception of the synchronization request by the centralized scheduler (3):
- preparing a synchronization message which comprises a space efficient data structure which comprises slot assignments in the data stream during which the end node (1) may exchange data,
- and sending the synchronization message from the centralized scheduler (3) to the end node (1),
and which comprises a data communication phase wherein data is transmitted and/or received by the end node (1) during the assigned slots.

15. A time slot allocation method according to claim 14 wherein preparing the synchronization message comprises applying a data filter with a predefined bit length to obtain the space efficient data structure.
